(19) Europäisches Patentamt
European Patent Office
Office européen des brevets

(11) **EP 3 238 958 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(51) Int Cl.:
**B60C 9/20** (2006.01)  **B60C 19/08** (2006.01)
**B60C 11/00** (2006.01)  **B60C 11/18** (2006.01)
**B29D 30/52** (2006.01)

(21) Anmeldenummer: **17155762.2**

(22) Anmeldetag: **13.02.2017**

(54) **NUTZFAHRZEUGREIFEN**

COMMERCIAL VEHICLE TYRES

PNEU DE VÉHICULE UTILITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2016 DE 102016207335**

(43) Veröffentlichungstag der Anmeldung:
**01.11.2017 Patentblatt 2017/44**

(73) Patentinhaber: **Continental Reifen Deutschland GmbH**
**30165 Hannover (DE)**

(72) Erfinder:
• **Kleffmann, Jens**
**30453 Hannover (DE)**
• **Schramm, Joachim**
**38112 Braunschweig (DE)**
• **Albers, Antonia**
**30169 Hannover (DE)**
• **Helde, Sebastian**
**30161 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-B1- 0 798 142        WO-A1-2015/149957
JP-A- 2000 190 709      JP-A- 2012 143 993
US-A1- 2008 216 941     US-A1- 2009 266 456
US-A1- 2016 059 636

EP 3 238 958 B1

**Beschreibung**

Die Erfindung betrifft einen Nutzfahrzeugreifen in Radialbauart mit einem zumindest drei Gürtellagen aufweisenden Gürtelverband, Wulstbereichen, zwei Seitenwänden, einer Radialkarkasse und einem profilierten Laufstreifen, wobei die Gürtellagen jeweils aus in eine Gürtelgummierung eingebetteten Festigkeitsträgern bestehen und wobei der Laufstreifen einen über zumindest 70% seiner Breite im Boden berührenden Bereich verlaufenden Laufstreifenteil aus einem ersten, elektrisch nicht leitfähigen Gummimaterial und zumindest einen Schulterabschnitt aus einem zweiten, elektrisch leitfähigen Gummimaterial aufweist, welches mit einer innerhalb des Reifens verlaufenden elektrisch leitenden und bis in den Wulstbereich verlaufenden Passage in Kontakt steht, wobei der bzw. jeder Schulterabschnitt den aus dem elektrisch nicht leitfähigen Gummimaterial bestehenden Laustreifenteil, von radial außen betrachtet, nicht überdeckt und den Randbereich der, von radial innen nach radial außen betrachtet, dritten Gürtellage in axialer Richtung über eine Breite von mindestens 3 mm überlappt und kontaktiert, wobei die Breite, im Querschnitt des Laufstreifens betrachtet, dem Normalabstand von zwei Senkrechten auf die Laufstreifenaußenfläche entspricht, wobei die eine Senkrechte die axial innerste Stelle des Schulterabschnittes und die andere Senkrechte die Kante der dritten Gürtellage berührt.

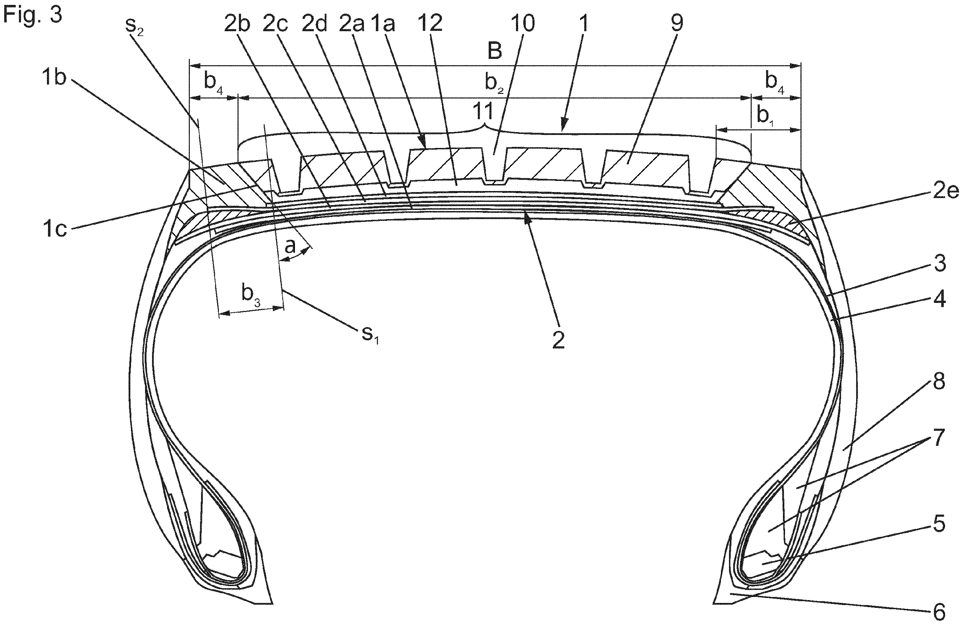

Die WO2015/149957 offenbart einen Nutzfahrzeugreifen der eingangs genannten Art, bei welchem die Seitenwände aus einem elektrisch leitfähigen Gummimaterial bestehen und sich bis über die Schulterbereiche des Reifens in den Laufstreifen hinein erstrecken, sodass elektrisch leitfähiges Gummimaterial während des Abriebes des Reifens und somit während der gesamten Nutzungsdauer zuverlässig einen Teil der Kontaktfläche des Laufstreifens zur Fahrbahn bildet. Bei der in Fig. 3 dargestellten Ausführungsvariante überlappen und kontaktieren jene Abschnitte der Seitenwand, welche im Laufstreifen schulterseitig zur Kontaktfläche des Fahrzeugluftreifens zur Fahrbahn gehören, die dritte Gürtellage über einen sehr schmalen Bereich.

Die US 2016/059636 A1 offenbart einen Nutzfahrzeugreifen mit einem in drei Abschnitte geteilten Laufstreifen, einem zentralen, aus elektrisch nicht leitfähigen Gummimaterial bestehenden Laufstreifenabschnitt, welcher die größte Breite von sämtlichen Laufstreifenabschnitten aufweist, und zwei schulterseitig verlaufenden, aus einem elektrisch leitfähigen Gummimaterial bestehenden Laufstreifenabschnitten. Radial innerhalb der aus elektrisch leitfähigem Gummimaterial bestehenden schulterseitigen Laufstreifenabschnitten ist Gummimaterial aus dem zentralen Laufstreifenteil als schmaler Streifen fortgesetzt, sodass das elektrisch leitfähige Gummimaterial der schulterseitigen Laufstreifenteile keinen Kontakt zu Gürtellagen besitzt.

Die JP 2012 143993 A offenbart einen Fahrzeugluftreifen, bei welchem der gesamte Laufstreifen grundsätzlich aus einem elektrisch nicht leitfähigen Gummimaterial besteht. An der Außenseite des Laufstreifens ist ein über den Reifenumfang verlaufendes bandartiges Element aus einer elektrisch leitenden Gummimischung eingebettet, welches mit einem im Laufstreifen eingebetteten Streifen aus einem elektrisch leitfähigen Material in Kontakt ist, welcher in axialer Richtung verläuft und an einer Stelle des Reifenumfanges für eine elektrisch leitfähige Verbindung des bandartigen Elementes zur Seitenwand sorgt.

Nutzfahrzeugreifen weisen üblicherweise Laufstreifen auf, die entweder als Monolaufstreifen oder zweischichtig mit einer Laufstreifenbase, deren Dicke in der Größenordnung von mindestens 1,5 mm bis zu 4 mm beträgt, und einer Laufstreifencap ausgeführt sind. Zusätzlich kann auf dem Gürtelverband eine weitere Gummischicht, die auch als Unterplatte bezeichnet wird, aufgebracht sein, deren Dicke üblicherweise kleiner als 1,5 mm ist.

Es wurde bereits vorgeschlagen, Laufstreifen von Nutzfahrzeugreifen derart auszuführen, dass sie im Boden berührenden Bereich aus mindestens zwei Umfangsabschnitten bestehen, die aus unterschiedlichen Gummimischungen hergestellt sind. Ein derartiger Nutzfahrzeugreifen ist beispielsweise aus der DE 10 2008 018 340 A1 bekannt. Um einen möglichst gleichmäßigen Abrieb des Laufstreifens über seine Breite sicherzustellen und ferner die Reißfestigkeit und die Dämpfungseigenschaften zu optimieren, werden voneinander unterschiedliche SSBR-Typen in den Polymersystemen der beiden Kautschukmischungen verwendet. Aus der EP 2 108 528 B1 ist ein Nutzfahrzeugreifen bekannt, welcher mit einem Laufstreifen versehen ist, der im Boden berührenden Bereich einen mittleren Abschnitt aus einer ersten Gummizusammensetzung und zwei Schulterabschnitte aus einer zweiten Gummizusammensetzung aufweist, wobei letztere eine um 5 % bis 30 % höhere Abriebsbeständigkeit besitzt als die Gummizusammensetzung im mittleren Abschnitt des Laufstreifens.

Eine Reduktion des Rollwiderstandes ist häufig ein bevorzugtes Ziel der Optimierung von Laufstreifen von Nutzfahrzeugreifen. Es ist bekannt, dass Laufstreifen, die nur einen geringen Rußanteil oder Ruß mit einer niedrigen Oberfläche enthalten und/oder als Füllstoff Kieselsäure (Silika) enthalten einen geringeren Rollwiderstand besitzen als übliche Laufstreifen, die aus Kautschukmischungen hergestellt sind, die ausschließlich Ruße, insbesondere solche mit großer Oberfläche, als Füllstoff enthalten. Mit Kieselsäure gefüllte Laufstreifen und/oder Laufstreifen aus Kautschukmischungen, die Ruße niedriger Oberfläche enthalten, weisen jedoch meist keine hinreichende elektrische Leitfähigkeit auf. Bei solchen Laufstreifen ist es Stand der Technik, einen sogenannten Carbon-Center-Beam vorzusehen. Carbon-Center-Beams werden üblicherweise aus der Mischung der Laufstreifenbase gebildet, wie es beispielsweise auch bei einer Ausführungsform der EP 0 872 360 B1 bekannt ist. Bei einer anderen Ausführungsform dieses Patentes sind Laufstreifenrandteile aus einem elektrisch leitfähigen Gummimaterial vorgesehen, welche die elektrisch leitfähigen Seitenwände kontaktieren, welche Brückenelemente zum elektrisch leitfähigen Verbinden des Fahrzeuges mit den Randteilen des Laufstreifens bilden. Bei dem aus der EP 0 798 142 B1 bekannten Fahrzeugluftreifen ist ebenfalls ein Laufstreifen aus einer elektrisch nicht leitenden Laufstreifencap und einer elektrisch leitenden Laufstreifenbase vorgesehen, welche derart gestaltet ist, dass sie lokal, beispielsweise im Mittelbereich des Laufstreifens, bis zu der mit der Fahrbahn in Berührung kommende Fläche des Laufstreifens reicht.

Der Erfindung liegt die Aufgabe zu Grunde, bei einem Nutzfahrzeugreifen der eingangs genannten Art eine Reduktion des Rollwiderstandes unter Verwendung einer elektrisch nicht leitenden Laufstreifenmischung in einem Monolaufstreifen oder in der Laufstreifencap eines zweischichtigen Laufstreifens zu ermöglichen, bei welchem auch die Laufstreifenbase keine hinreichende elektrische Leitfähigkeit aufweist, sodass kein Carbon-Center-Beam aus der Mischung der Laufstreifenbase gebildet werden kann. Darüber hinaus soll auf die Haltbarkeit des Reifens in den Schulterbereichen Bedacht genommen werden.

Gelöst wird die gestellte Aufgabe erfindungsgemäß dadurch, dass der Schulterabschnitt den Randbereich der dritten Gürtellage in axialer Richtung über eine Breite von 10 mm bis zu 30 mm, insbesondere von bis zu 20 mm, überlappt und kontaktiert.

Die Erfindung ermöglicht den Einsatz eines elektrisch nicht leitfähigen, vorzugsweise mit Kieselsäure und/oder mit Rußen niedriger Oberfläche gefüllten Gummimaterials über einen Großteil der Breite des Laufstreifens, wobei eine Ableitung elektrischer Ladungen über den/die Schulterabschnitt(e) gewährleistet ist. Darüber hinaus ist die erfindungsgemäße Ausführung optimal auf die konstruktiven Gegebenheiten eines Nutzfahrzeugreifens abgestimmt, da die Schulterabschnitte in axialer Richtung soweit Richtung Laufstreifenmitte verlaufen, dass sie die dritte Gürtellage zumindest über einen Bereich einer Breite von 10 mm überlappen und kontaktieren, wodurch sie auch bei fortschreitendem Abrieb den betreffenden Randbereich des Gürtelverbandes überdecken, wobei Überlappungsbreiten in dieser Größenordnung für die Stabilisierung und die Haltbarkeit der Schulterbereiche des Laufstreifens besonders günstig sind.

Zur Ableitung elektrostatischer Aufladungen ist es grundsätzlich ausreichend, wenn an einer der Reifenschultern ein Schulterabschnitt aus dem elektrisch leitfähigen Gummimaterial vorgesehen ist. Für einen möglichst gleichmäßigen Abrieb des Laufstreifens ist es jedoch vorteilhaft, wenn der Laufstreifen an jeder Reifenschulter einen Schulterabschnitt aus dem elektrisch leitfähigen Gummimaterial aufweist.

Bevorzugt ist ferner eine Ausführung der Erfindung, bei der jeder Schulterabschnitt an der Laufstreifenaußenfläche eine Breite von 5% bis 15%, insbesondere von 10% bis 15%, der Breite des Laufstreifens im bodenberührenden Bereich aufweist. Die Breite der Schulterabschnitte wird derart gewählt, dass eine Ableitung elektrostatischer Aufladungen sichergestellt ist sind, wobei das Volumen des elektrisch nicht leitfähigen und hinsichtlich eines geringen Rollwiderstandes optimierbaren mittleren Laufstreifenteils möglichst groß bleibt.

Die Schulterabschnitte aus dem elektrisch leitfähigen Gummimaterial können unterschiedlich gestaltet sein. Bei einer möglichen und bevorzugten Ausführungsform ist jeder Schulterabschnitt derart ausgeführt, dass zwischen dem Schulterabschnitt und dem elektrisch nicht leitfähigen Laufstreifenteil eine Grenzfläche vorliegt, welche im Wesentlichen entlang der axial weiter innen verlaufenden Senkrechten auf die Laufstreifenaußenfläche verläuft.

Bei einer weiteren, besonders vorteilhaften Ausführungsvariante der Erfindung überlappt der elektrisch nicht leitfähige Laufstreifenteil den Schulterabschnitt von außen, wobei zwischen dem Schulterabschnitt und dem elektrisch nicht leitfähigen Laufstreifenteil eine Grenzfläche vorliegt, welche unter einem Winkel von 5° bis 45°, insbesondere von 10° bis 25°, zu den beiden Senkrechten auf die Laufstreifenaußenfläche verläuft. Bei dieser Ausführungsvariante kann die Breite jedes Schulterabschnittes an der Laufstreifenaußenfläche relativ gering sein, sodass das Gummivolumen des elektrisch nicht leitfähigen Laufstreifenteils vergleichsweise groß gehalten werden kann, was sich günstig auf den Rollwiderstand auswirkt.

Die Erfindung ist sowohl bei Laufstreifen anwendbar, die in radialer Richtung zwei Schichten aufweisen oder zweischichtig ausgeführt sind, als auch bei Laufstreifen, die als Monolaufstreifen ausgeführt sind.

Bei einer konstruktiven Auslegung des Laufstreifens ist der zumindest eine Schulterabschnitt unmittelbar auf zumindest einem im Unterbau des Reifens befindlichen Bauteil positioniert und der übrige Teil des Laufstreifens ist zweischichtig aus einer den elektrisch nicht leitfähigen Laufstreifenteil bildenden Laufstreifencap sowie einer radial innerhalb der Laufstreifencap verlaufenden Laufstreifenbase aus einem elektrisch nicht leitfähigen Gummimaterial aufgebaut.

Bei einer Ausführung des Laufstreifens als Monolaufstreifen besteht dieser aus dem elektrisch nicht leitfähigen Laufstreifenteil und dem zumindest einen elektrisch leitfähigen Schulterabschnitt.

Das Gummimaterial der elektrisch leitfähigen Schulterabschnitte kann gemäß der Erfindung zumindest einen besonderen Ruß enthalten, der für eine hinreichende elektrische Leitfähigkeit sorgt und für welchen folgende Beziehung gilt:

$$O_m \times V_a^2 > 1{,}8 \ m^2/g,$$

mit $O_m[m^2/g]$: mittlere Oberfläche des/der verwendeten Rußes/Ruße,

$V_a$: Volumenanteil des Rußes/der Ruße in der Kautschukmischung für die Schulterabschnitte.

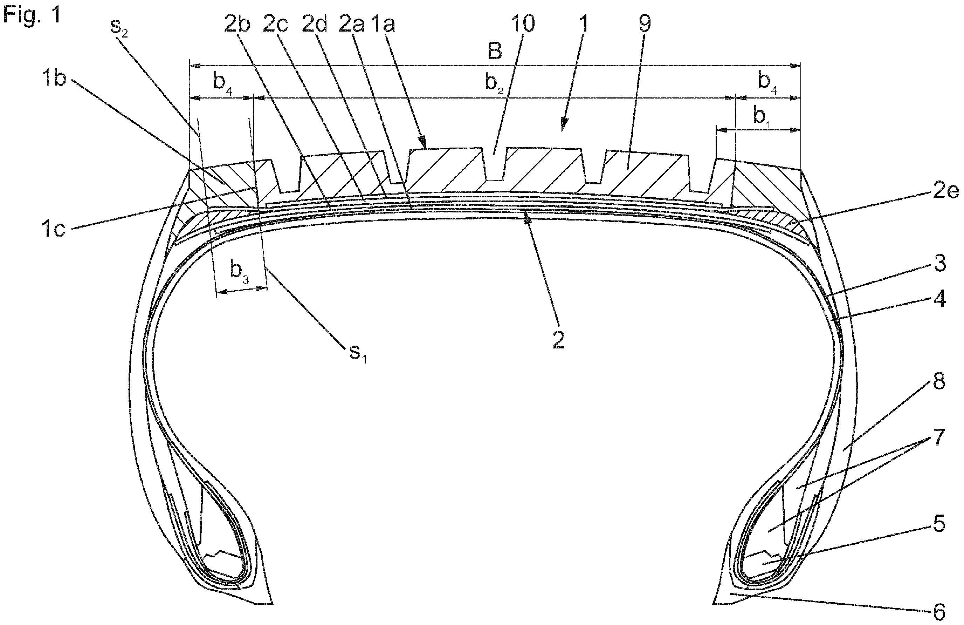

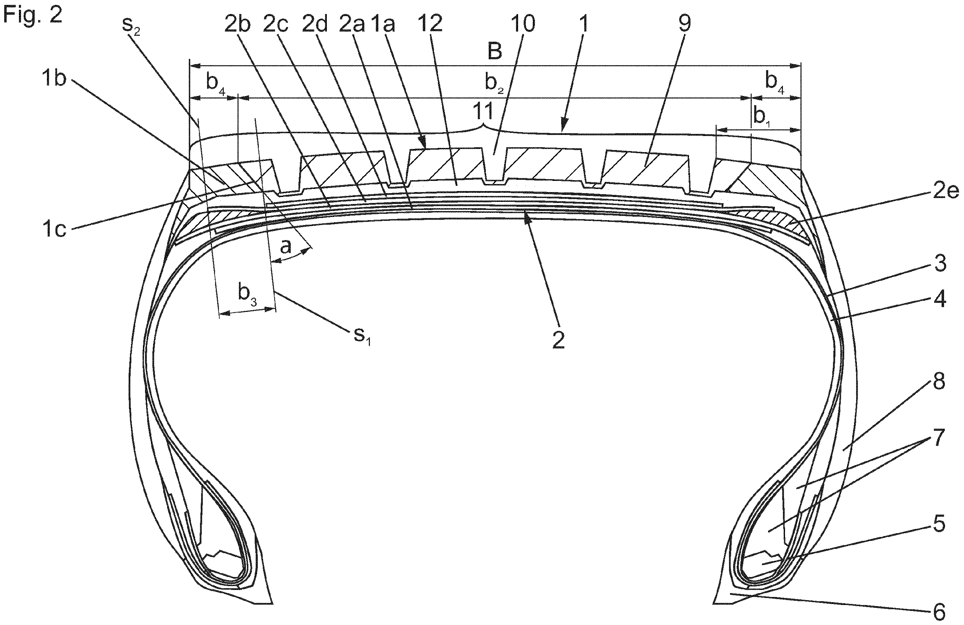

Weitere Merkmale, Vorteile und Einzelheiten der Erfindung werden nun anhand der Zeichnung, die mehrere Ausführungsbeispiele darstellt, näher beschrieben. Dabei zeigen Fig. 1, Fig. 3 und Fig. 4 schematische Querschnitte durch Fahrzeugluftreifen mit unterschiedlichen Ausführungsvarianten der Erfindung, Fig. 2 einen schematischen Querschnitt durch einen nicht erfindungsgemäßen Fahrzeugluftreifen.

In der nachfolgenden Beschreibung wird auf elektrisch leitfähige und auf elektrisch nicht leitfähige Gummimaterialien Bezug genommen. Unter einem elektrisch nicht leitfähigen Gummimaterial wird dabei ein solches verstanden, welches einen spezifischen elektrischen Widerstand $> 5 \times 10^6$ $\Omega$cm (gemäß DIN 53482) aufweist. Gummimaterialien, welche einen spezifischen elektrischen Widerstand $\leq 5 \times 10^6$ $\Omega$cm (gemäß DIN 53482) aufweisen, haben eine hinreichende elektrische Leitfähigkeit und werden daher in der nachfolgenden Beschreibung als elektrisch leitfähig bezeichnet. Eine hinreichende elektrische Leitfähigkeit wird üblicherweise mittels Ruß(en) als Füllstoff sichergestellt. Ein Gummimaterial weist vorzugsweise dann eine hinreichende elektrische Leitfähigkeit auf, wenn gilt:

$$O_m \times V_a^2 > 1{,}8 \ m^2/g,$$

mit

$O_m[m^2/g]$: mittlere Oberfläche des/der verwendeten Rußes/Ruße und

$V_a$: Volumenanteil des Rußes/ der Ruße in dem dem Gummimaterial zu Grunde liegenden Kautschukmischung. Der Volumenanteil von Ruß beträgt vorzugsweise in der Größenordnung von 0,4 bis 0,66.

Elektrisch nicht leitfähige Gummimaterialien enthalten üblicherweise Kieselsäure (Silika) als Füllstoff und Ruße, wenn überhaupt, nur in kleinen Mengen oder solche Rußtypen, die eine niedrige Oberfläche aufweisen. Der Hauptvorteil von Kieselsäure enthaltenden Gummimaterialien in Reifenbauteilen besteht vor allem in der Erzielung eines geringen Rollwiderstandes des Reifens. Im Laufstreifen von Fahrzeugluftreifen ist ein weiterer Vorteil eine Verbesserung der Nassgriffeigenschaften.

In Fig. 1 bis Fig. 4 sind Querschnitte durch Nutzfahrzeugreifen in Radialbauart mit einem, abgesehen vom Laufstreifen 1, üblichen Aufbau dargestellt. Bezeichnet sind in den Fig.1 bis Fig.4 jeweils ein Gürtelverband 2 mit vier Gürtellagen 2a, 2b, 2c, 2d, eine mit Festigkeitsträgern verstärkte Radialkarkasse 3, eine Innenschicht 4, Seitenwände 8 und Wulstbereiche mit Wulstkernen 5, Rimstrips 6 und Kernprofilen 7. In den Wulstbereichen können weitere, nicht dargestellte und nicht bezeichnete Verstärkungslagen eingebaut sein. Im Bereich der Reifenschultern befinden sich im Bereich der Gürtelkanten Gummipolster 2e. Der Laufstreifen 1, auf dessen Ausgestaltung und Aufbau noch im Detail eingegangen wird, die Innenschicht 4, die Rimstrips 6, die Kernprofile 7 und die Seitenwände 8 bestehen aus unterschiedlichen, auf die gewünschten Eigenschaften dieser Bauteile abgestimmten Gummimaterialien. Die Gürtellagen 2a, 2b, 2c, 2d sowie die Radialkarkasse 3 bestehen aus in Gummierungen eingebetteten Festigkeitsträgern, vorzugsweise aus Stahl. Zwischen dem Gürtelverband 2 und dem Laufstreifen 1 kann eine dünne Unterplatte aus Gummi, welche eine Dicke kleiner als 1,5 mm aufweist und nicht dargestellt ist, vorgesehen sein. Andere Varianten von Gürtelkonstruktionen, auch solche mit mehr oder weniger als vier Gürtellagen, sind möglich.

Bei sämtlichen beispielhaften Ausführungsvarianten weist der Laufstreifen 1 mehrere in Umfangsrichtung verlaufende Profilrippen 9 auf, die als umlaufende und nicht unterbrochene Bänder ausgeführt sein können oder blockartig strukturiert sein können oder sich aus Profilblöcken zusammensetzen können. Die Profilrippen 9 sind voneinander durch Umfangsrillen 10, die über den Reifenumfang gerade, zickzack- oder wellenförmig verlaufen können, getrennt. Bei den in den Figuren gezeigten Ausführungen weist der Laufstreifen 1 sechs Profilrippen 9 und fünf Umfangsrillen 10 auf, wobei sowohl die Profilrippen 9 als auch die Umfangsrillen 10 unterschiedliche Breiten aufweisen können. Die schulterseitigen Profilrippen 9 weisen vorzugsweise eine Mindestbreite $b_1$ von jeweils 10% der Bodenaufstandsflächenbreite B des Reifens auf, wobei $b_1$ in Draufsicht auf den Laufstreifen 1 von den am weitesten laufstreifenaußenseitig befindlichen Randkantenbereichen der schulterseitigen Umfangsrillen 10 in axialer Richtung ermittelt wird.

Bei sämtlichen Ausführungsvarianten weist ferner der Laufstreifen 1 einen beim Abrollen des Reifens mit dem Untergrund in Kontakt kommenden und in Umfangrichtung umlaufenden Laufstreifenteil 1a aus einem elektrisch nicht leitfähigen Gummimaterial auf. Die Breite $b_2$ des Laufstreifenteils 1a beträgt bis zu 90% der Bodenaufstandsflächenbreite B des Laufstreifens 1. Der Laufstreifen 1 weist ferner an zumindest einer seiner Schultern einen beim Abrollen des Reifens ebenfalls mit dem Untergrund in Kontakt kommenden Schulterabschnitt 1b aus einem elektrisch leitfähigen Gummimaterial auf. Jeder Schulterabschnitt 1b weist an der Laufstreifenaußenfläche eine Breite $b_4$ von 5% bis 15%, insbesondere von 10% bis 15%, der Breite B des Laufstreifens 1 im bodenberührenden Bereich auf. Der bzw. jeder Schulterabschnitt lb ist derart gestaltet, dass er einerseits, im Querschnitt und in radialer Richtung betrachtet, den Laufstreifenteil 1a von oben bzw. außen nicht überlappt und andererseits in axialer Richtung über einen Bereich einer Breite $b_3$ von mindestens 3 mm, vorzugsweise von bis zu 30 mm, insbesondere von 10 mm bis 20 mm, mit der dritten Gürtellage 2c überlappt. Die Breite $b_3$ des Überlappungsbereiches wird im Querschnitt des Laufstreifens 1 als Normalabstand zwischen zwei Senkrechten $s_1$ und $s_2$ auf die Laufstreifenaußenfläche ermittelt, wobei die Senkrechte $s_1$ die axial innerste Stelle des Schulterabschnittes lb berührt und die Senkrechte $s_2$ die Kante der Gürtellage 2c berührt.

Fig. 1 zeigt eine Ausführungsvariante, bei welcher der Laufstreifen 1 als Monolaufstreifen ausgeführt ist und sich aus dem Laufstreifenteil 1a und zwei Schulterabschnitten 1b zusammensetzt. Die Breite $b_2$ des Laufstreifenteils 1a, an der Laufstreifenaußenfläche ermittelt, beträgt insbesondere 70% bis 85% der Bodenaufstandsflächenbreite B des Laufstreifens 1. Der Laufstreifenteil 1a verläuft vorzugsweise symmetrisch zur zentralen Mittelebene M-M des Reifens. Der Laufstreifenteil 1a erstreckt sich ferner vorzugsweise über die schulterseitig verlaufenden Umfangsrillen 10 hinaus bis in die schulterseitigen Profilrippen 9. Die beiden Schulterabschnitte 1b nehmen Umfangsabschnitte der schulterseitigen Profilrippen 9 ein und erstrecken sich mit einem im Querschnitt schmäler werdenden und somit auslaufenden Abschnitt in radialer Richtung über die Reifenschultern, insbesondere entlang der Polster 2e. Bei der gezeigten Ausführung überdecken die radial äußeren Endabschnitte der Seitenwände 8 die schulterseitigen Profilrippen 9 von außen. Die Überdeckung der schulterseitigen Profilrippen 9 kann wie dargestellt komplett sein oder nur über einen Teilbereich der Profilrippen 9 erfolgen. Die Schulterabschnitte lb stehen in direktem Kontakt mit elektrisch leitfähigem Material, beispielsweise mit zumindest einem weiteren Reifenbauteil aus einem elektrisch leitfähigen Gummimaterial, welches zu einer elektrisch leitfähigen Passage zur metallischen Felge gehört. So können beispielsweise die Seitenwände 8 und die Rimstrips 6 aus einem elektrisch leitfähigen Gummimaterial bestehen. Bei einer Ausführungsform, bei welcher die Seitenwände 8 aus elektrisch nicht leitfähigem Gummimaterial bestehen, kann beispielsweise elektrisch leitfähiges Material an der Innenseite der Seitenwände 8 verlaufend aufgebracht sein.

Bei der in Fig. 1 gezeigten Ausführung sind die Schulterteile 1b und der Laufstreifenteil 1a derart gestaltet, dass die Grenzflächen 1c zwischen dem Laufstreifenteil 1a und den Schulterabschnitten 1b im Wesentlichen senkrecht zur Laufstreifenaußenfläche verlaufen, sodass die bereits erwähnte Senkrechte $s_1$ jeweils im Wesentlichen entlang der Grenzfläche 1c verläuft. Die mit den Schulterabschnitten lb jeweils über die Breite $b_3$ überlappende dritte Gürtellage 2c steht in Kontakt mit den Schulterabschnitten 1b.

Bei der in Fig. 2 gezeigten nicht erfindungsgemäßen Ausführungsvariante weist der Laufstreifen 1 in radialer Richtung einen zweischichtigen Aufbau aus einer über die Bodenaufstandsflächenbreite B beim Abrollen des Reifens mit dem Untergrund in Kontakt kommenden Laufstreifencap 11 und einer Laufstreifenbase 12 auf, welche in diesem Beispiel unmittelbar auf der radial äußersten Gürtellage 2d positioniert ist und über die gesamte Breite der Laufstreifencap 11 verläuft. Die Laufstreifenbase 12 besteht aus einem elektrisch nicht leitfähigen Gummimaterial und trägt somit zusätzlich zu einer Verringerung des Rollwiderstandes bei. Die Laufstreifencap 11 setzt sich aus dem elektrisch nicht leitfähigen Laufstreifenteil 1a und den beiden elektrisch leitfähigen Schulterabschnitten 1b zusammen. Die axiale Erstreckung des Laufstreifenteils 1a an der Laufstreifenaußenfläche entspricht jener gemäß Fig. 1. Die Schulterabschnitte 1b verlaufen in radialer Richtung entlang der Reifenschultern gemeinsam mit der Laufstreifenbase 12 aus. Die Schulterabschnitte 1b weisen einen trapezähnlichen Querschnitt auf und sind derart gestaltet, dass sie jeweils vom Lauf streif enteil 1a radial außen überlappt sind, wobei die Grenzflächen 1c zwischen den Schulterabschnitten 1b und dem Laufstreifenteil 1a jeweils unter einem Winkel $\alpha$ von 5° bis 45°, insbesondere von 10° bis 25°, zur Senkrechten $s_1$ auf die Laufstreifenoberfläche verlaufen. Die Grenzflächen 1c sind somit Richtung Reifenmitte derart geneigt, dass die Breite der Schulterabschnitte 1b entlang der Grenzflächen 1c von radial außen nach radial innen, Richtung Laufstreifenbase 12, kontinuierlich zunimmt. Die Ausgestaltung der Schulterabschnitte 1b ist dabei derart, dass sie mit der dritten Gürtellage 2c in axialer Richtung über den erwähnten Bereich der Breite $b_3$ überlappen.

Fig. 3 zeigt eine Variante des Ausführungsbeispiels gemäß Fig. 2, wobei sich die beiden Schulterabschnitte 1b unmittelbar auf den im Unterbau des Reifens befindlichen Bauteilen befinden und der zwischen den Schulterabschnitten 1b befindliche Laufstreifenteil in radialer Richtung zweischichtig mit einer Laufstreifencap 11 und einer Laufstreifenbase 12 ausgeführt ist.

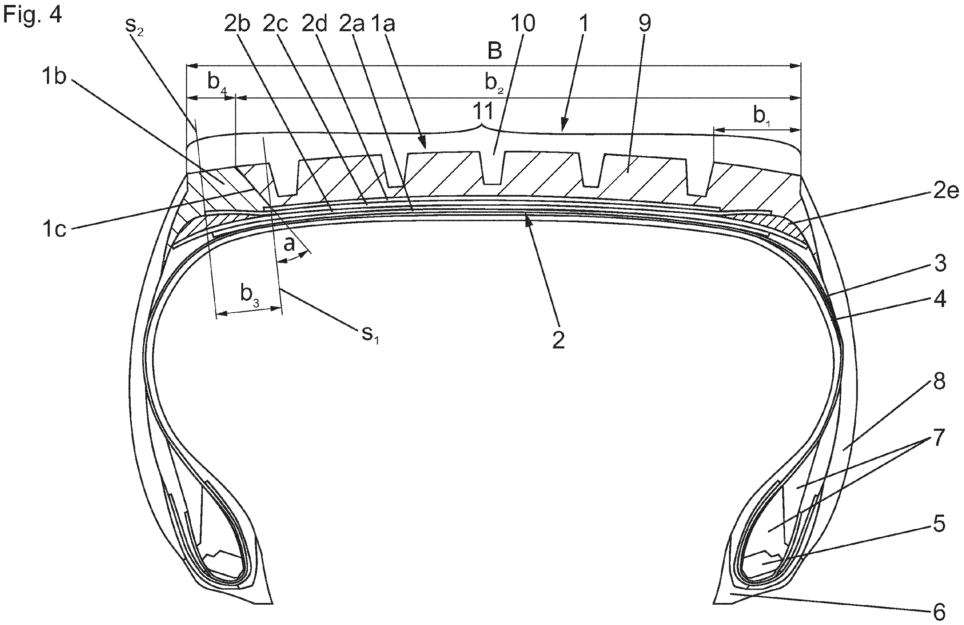

Fig. 4 zeigt eine Ausführungsform mit einem als Monolaufstreifen ausgeführten Laufstreifen 1 - ohne Laufstreifenbase - und mit einem einzigen Schulterabschnitt 1b. Der Lauf streif enteil 1a erstreckt sich von diesem ausgehend bis zur und über die zweite Reifenschulter. Analog zum Ausführungsbeispiel gemäß Fig. 3 ist der Schulterabschnitt 1b derart gestaltet, dass die Grenzfläche 1c zwischen dem Schulterabschnitt lb und dem Lauf streif enteil 1a unter dem erwähnten Winkel $\alpha$ verläuft.

Weitere nicht gezeigte Ausführungsvarianten können Kombinationen der in den Figuren 1 bis 4 gezeigten Ausführungsformen sein.

Bezugsziffernliste

| | |
|---|---|
| 1 | Laufstreifen |
| 1a | Laufstreifenteil |
| 1b | Schulterabschnitt |
| 1c | Grenzfläche |
| 2 | Gürtelverband |
| 2a, 2b, 2c, 2d | Gürtellage |
| 2e | Polster |
| 3 | Radialkarkasse |
| 4 | Innenschicht |
| 5 | Wulstkern |
| 6 | Rimstrip |
| 7 | Kernprofil |
| 8 | Seitenwand |
| 9 | Profilrippe |
| 10 | Umfangsrille |
| 11 | Laufstreifencap |
| 12 | Laufstreifenbase |
| $B, b_1, b_2, b_3, b_4$ | Breite |
| $s_1, s_2$ | Senkrechte |

## Patentansprüche

1. Nutzfahrzeugreifen in Radialbauart mit einem zumindest drei Gürtellagen (2a, 2b, 2c, 2d) aufweisenden Gürtelverband, Wulstbereichen, zwei Seitenwänden (8), einer Radialkarkasse (3) und einem profilierten Laufstreifen (1), wobei die Gürtellagen (2a, 2b, 2c, 2d) jeweils aus in eine Gürtelgummierung eingebetteten Festigkeitsträgern bestehen und wobei der Laufstreifen (1) einen über zumindest 70% seiner Breite (B) im Boden berührenden Bereich verlaufenden Laufstreifenteil (1a) aus einem ersten, elektrisch nicht leitfähigen Gummimaterial und zumindest einen Schulterabschnitt (1b) aus einem zweiten, elektrisch leitfähigen Gummimaterial aufweist, welches mit einer innerhalb des Reifens verlaufenden elektrisch leitenden und bis in den Wulstbereich verlaufenden Passage in Kontakt steht, wobei der bzw. jeder Schulterabschnitt (1b) den aus dem elektrisch nicht leitfähigen Gummimaterial bestehenden Laustreifenteil (1a), von radial außen betrachtet, nicht überdeckt und den Randbereich der, von radial innen nach radial außen betrachtet, dritten Gürtellage (2c) in axialer Richtung über eine Breite ($b_3$) überlappt und kontaktiert, wobei die Breite ($b_3$), im Querschnitt des Laufstreifens (1) betrachtet, dem Normalabstand von zwei Senkrechten ($s_1, s_2$) auf die Laufstreifenaußenfläche entspricht, wobei die eine Senkrechte ($s_1$) die axial innerste Stelle des Schulterabschnittes (1b) und die andere Senkrechte ($s_2$) die Kante der dritten Gürtellage (2c) berührt,
**dadurch gekennzeichnet,**
**dass** der Schulterabschnitt (1b) den Randbereich der dritten Gürtellage (2c) in axialer Richtung über eine Breite ($b_3$) von 10 mm bis zu 30 mm, insbesondere von bis zu 20 mm, überlappt und kontaktiert.

2. Nutzfahrzeugreifen nach Anspruch 1, **dadurch gekennzeichnet, dass** der Laufstreifen (1) an jeder Reifenschulter einen Schulterabschnitt (1b) aus einem elektrisch leitfähigen Gummimaterial aufweist.

3. Nutzfahrzeugreifen nach Anspruch 1 oder 2, **dadurch gekennzeichnet, dass** jeder Schulterabschnitt (1b) an der Laufstreifenaußenfläche eine Breite ($b_4$) von 5% bis 15%, insbesondere von 10% bis 15%, der Breite (B) des Laufstreifens (1) im bodenberührenden Bereich aufweist.

4. Nutzfahrzeugreifen nach einem der Ansprüche 1 bis 3, **dadurch gekennzeichnet, dass** zwischen dem Schulterabschnitt (1b) und dem elektrisch nicht leitfähigen Laufstreifenteil (1a) eine Grenzfläche (1c) vorliegt, welche im Wesentlichen entlang der Senkrechten ($s_1$), welche die axial innerste Stelle des Schulterabschnittes (1b) berührt, verläuft.

5. Nutzfahrzeugreifen nach einem der Ansprüche 1 bis 4, **dadurch gekennzeichnet, dass** der elektrisch nicht leitfähige Laufstreifenteil (1a) den Schulterabschnitt (1b) von außen überlappt, wobei zwischen dem Schulterabschnitt (1b) und dem elektrisch nicht leitfähigen Laufstreifenteil (1a) eine Grenzfläche (1c) vorliegt, welche unter einem Winkel ($\alpha$) von 5° bis 45°, insbesondere von 10° bis 25°, zu den Senkrechten ($s_1, s_2$) auf die Laufstreifenaußenfläche verläuft.

6. Nutzfahrzeugreifen nach einem der Ansprüche 1 bis 5, **dadurch gekennzeichnet, dass** der zumindest eine Schulterabschnitt (1b) unmittelbar auf zumindest einem im Unterbau des Reifens befindlichen Bauteil positioniert ist und der übrige Teil des Laufstreifens (1) zweischichtig aus einer den elektrisch nicht leitfähigen Laufstreifenteil (1a) bildenden Laufstreifencap (11) sowie einer radial innerhalb der Laufstreifencap (11) verlaufenden Laufstreifenbase (12) aus einem elektrisch nicht leitfähigen Gummimaterial besteht.

7. Nutzfahrzeugreifen nach einem der Ansprüche 1 bis 5, **dadurch gekennzeichnet, dass** der Laufstreifen (1) ein Monolaufstreifen ist, welcher aus dem elektrisch nicht leitfähigen Laufstreifenteil (1a) und dem zumindest einen elektrisch leitfähigen Schulterabschnitt (1b) besteht.

8. Nutzfahrzeugreifen nach einem der Ansprüche 1 bis 7, **dadurch gekennzeichnet, dass** zwischen dem Laufstreifen (1) und der radial äußersten Gürtellage (2d) befindliche Gummischichten aus einem elektrisch nicht leitfähigen Gummimaterial bestehen.

9. Nutzfahrzeugreifen nach einem der Ansprüche 1 bis 8, **dadurch gekennzeichnet, dass** das elektrisch leitfähigen Gummimaterial des/der Schulterabschnitte(s) (1b) Ruß/Ruße enthält, für welche folgende Beziehung gilt:

$$O_m \text{ x } V_a^2 > 1,8 \text{ m}^2/\text{g},$$

mit $O_m [\text{m}^2/\text{g}]$: mittlere Oberfläche des/der verwendeten Rußes/Ruße,
$V_a$: Volumenanteil des Rußes/der Ruße in der Kautschukmischung für den/die Schulterabschnitt(e).

**Claims**

1. Commercial-vehicle tyre of radial construction with a belt assembly having at least three belt plies (2a, 2b, 2c, 2d), bead regions, two sidewalls (8), a radial carcass (3) and a profiled tread (1), wherein the belt plies (2a, 2b, 2c, 2d) each consist of strength members embedded in a belt rubber coating, and wherein the tread (1) has a tread part (1a), extending across at least 70% of its width (B) in the region in contact with the ground, made of a first rubber material that is not electrically conductive, and at least one shoulder portion (1b) made of a second rubber material that is electrically conductive and is in contact with an electrically conductive passage extending within the tyre and into the bead region, wherein the or each shoulder portion (1b), as seen from radially on the outside, does not cover the tread part (1a) consisting of the rubber material that is not electrically conductive, and overlaps and contacts the peripheral region of the third belt ply (2c), as seen from radially on the inside to radially on the outside, in an axial direction across a width ($b_3$), wherein the width ($b_3$), as seen in the cross section of the tread (1), corresponds to the normal spacing of two perpendiculars ($s_1$, $s_2$) to the tread outer face, wherein one perpendicular ($s_1$) touches the axially innermost point of the shoulder portion (1b) and the other perpendicular ($s_2$) touches the edge of the third belt ply (2c),
   **characterized**
   **in that** the shoulder portion (1b) overlaps and contacts the peripheral region of the third belt ply (2c) in an axial direction across a width ($b_3$) of 10 mm up to 30 mm, in particular of up to 20 mm.

2. Commercial-vehicle tyre according to Claim 1, **characterized in that** the tread (1) has at each tyre shoulder a shoulder portion (1b) made of an electrically conductive rubber material.

3. Commercial-vehicle tyre according to Claim 1 or 2, **characterized in that** each shoulder portion (1b) at the tread outer face has a width ($b_4$) of 5% to 15%, in particular of 10% to 15%, of the width (B) of the tread (1) in the region in contact with the ground.

4. Commercial-vehicle tyre according to one of Claims 1 to 3, **characterized in that**, between the shoulder portion (1b) and the tread part (1a) that is not electrically conductive, there is an interface (1c) that extends substantially along the perpendicular ($s_1$) that touches the axially innermost point of the shoulder portion (1b).

5. Commercial-vehicle tyre according to one of Claims 1 to 4, **characterized in that** the tread part (1a) that is not electrically conductive overlaps the shoulder portion (1b) from the outside, wherein, between the shoulder portion (1b) and the tread part (1a) that is not electrically conductive, there is an interface (1c) that extends at an angle ($\alpha$) of 5° to 45°, in particular of 10° to 25°, to the perpendiculars ($s_1$, $s_2$) to the tread outer face.

6. Commercial-vehicle tyre according to one of Claims 1 to 5, **characterized in that** the at least one shoulder portion (1b) is positioned directly on at least one component located in the substructure of the tyre, and the remaining part of the tread (1) consists, in two layers, of a tread cap (11), forming the tread part (1a) that is not electrically conductive, and of a tread base (12), extending radially inside the tread cap (11), made of a rubber material that is not electrically conductive.

7. Commercial-vehicle tyre according to one of Claims 1 to 5, **characterized in that** the tread (1) is a one-piece tread, which consists of the tread part (1a) that is not electrically conductive and the at least one electrically conductive shoulder portion (1b).

8. Commercial-vehicle tyre according to one of Claims 1 to 7, **characterized in that**, between the tread (1) and the radially outermost belt ply (2d), there are located rubber layers made of a rubber material that is not electrically conductive.

9. Commercial-vehicle tyre according to one of Claims 1 to 8, **characterized in that** the electrically conductive rubber material of the shoulder portion(s) (1b) contains carbon black(s) for which the following relationship applies:

$$O_m \times V_a^2 > 1.8 \ m^2/g,$$

with $O_m[m^2/g]$: mean surface area of the carbon black(s) used,
$V_a$: volume fraction of the carbon black(s) in the rubber compound for the shoulder portion(s).

## Revendications

1. Pneu de véhicule utilitaire à structure radiale comprenant un ensemble de ceinture comprenant au moins trois couches de ceinture (2a, 2b, 2c, 2d), des régions de talon, deux parois latérales (8), une carcasse radiale (3) et une bande de roulement profilée (1), dans lequel les couches de ceinture (2a, 2b, 2c, 2d) sont respectivement constituées d'éléments de renfort noyés dans un gommage de ceinture, dans lequel la bande de roulement (1) comprend une partie (1a) de bande de roulement s'étendant sur au moins 70 % de sa largeur (B) dans la région en contact avec le sol et constituée d'un premier matériau de caoutchouc non électroconducteur et au moins une partie d'épaulement (1b) constituée d'un deuxième matériau de caoutchouc électroconducteur, lequel est en contact avec un passage électroconducteur s'étendant à l'intérieur du pneu et s'étendant jusque dans la région de talon, dans lequel la ou chaque partie d'épaulement (1b) ne recouvre pas la partie (1a) de bande de roulement constituée du matériau de caoutchouc non électroconducteur, considérée radialement depuis l'extérieur, et chevauche et est en contact avec la région de bord de la troisième couche de ceinture (2c), considérée radialement de l'intérieur vers l'extérieur, dans la direction axiale sur une largeur ($b_3$), dans lequel la largeur ($b_3$), considérée en section transversale de la bande de roulement (1), correspond à l'espacement normal de deux normales ($s_1$, $s_2$) à la surface extérieure de la bande de roulement, dans lequel l'une des normales ($s_1$) est en contact avec le point le plus axialement à l'intérieur de la partie d'épaulement (1b) et l'autre normale ($s_2$) est en contact avec l'arête de la troisième couche de ceinture (2c),
**caractérisé en ce que**
la partie d'épaulement (1b) chevauche et est en contact avec la région de bord de la troisième couche de ceinture (2c) dans la direction axiale sur une largeur ($b_3$) de 10 mm à 30 mm, en particulier jusqu'à 20 mm.

2. Pneu de véhicule utilitaire selon la revendication 1, **caractérisé en ce que** la bande de roulement (1) comprend, au niveau de chaque épaulement de pneu, une partie d'épaulement (1b) constituée d'un matériau de caoutchouc électroconducteur.

3. Pneu de véhicule utilitaire selon la revendication 1 ou 2, **caractérisé en ce que** chaque partie d'épaulement (1b) présente, au niveau de la surface extérieure de bande de roulement, une largeur ($b_4$) de 5% à 15%, en particulier de 10% à 15%, de la largeur (B) de la bande de roulement (1) dans la région en contact avec le sol.

4. Pneu de véhicule utilitaire selon l'une des revendications 1 à 3, **caractérisé en ce qu'**une surface limite (1c) est présente entre la partie d'épaulement (1b) et la partie (1a) de bande de roulement non électroconductrice, laquelle surface limite s'étend sensiblement le long de la normale ($s_1$) qui est en contact avec le point le plus axialement intérieur de la partie d'épaulement (1b).

**5.** Pneu de véhicule utilitaire selon l'une des revendications 1 à 4, **caractérisé en ce que** la partie (1a) de bande de roulement non électroconductrice chevauche la partie épaulement (1b) depuis l'extérieur, une surface limite (1c) étant présente entre la partie d'épaulement (1b) et la partie (1a) de bande de roulement non électroconductrice, laquelle surface limite s'étend suivant un angle ($\alpha$) de 5° à 45°, en particulier de 10° à 25°, par rapport aux normales ($s_1$, $s_2$) à la surface extérieure de bande de roulement.

**6.** Pneu de véhicule utilitaire selon l'une des revendications 1 à 5, **caractérisé en ce que** ladite au moins une partie d'épaulement (1b) est positionnée directement sur au moins un composant se trouvant dans la partie sous-jacente du pneu et la partie restante de la bande de roulement (1) est réalisée en deux couches à partir d'un chapeau (11) de bande de roulement formant la partie (1a) de bande de roulement non électroconductrice et d'une base (12) de bande de roulement en un matériau de caoutchouc non électroconducteur s'étendant radialement à l'intérieur du chapeau (11) de bande de roulement.

**7.** Pneu de véhicule utilitaire selon l'une des revendications 1 à 5, **caractérisé en ce que** la bande de roulement (1) est une bande de roulement monolithique, laquelle est constituée de la partie (1a) de bande de roulement non électroconductrice et de ladite au moins une partie d'épaulement (1b) électroconductrice.

**8.** Pneu de véhicule utilitaire selon l'une des revendications 1 à 7, **caractérisé en ce que** des couches de caoutchouc se trouvant entre la bande de roulement (1) et la couche de ceinture (2d) radialement le plus à l'extérieur sont constituées d'un matériau de caoutchouc non électroconducteur.

**9.** Pneu de véhicule utilitaire selon l'une des revendications 1 à 8, **caractérisé en ce que** le matériau de caoutchouc électroconducteur de la/des partie(s) d'épaulement (1b) contient du/des noir(s) de carbone pour le(s)quel(s) la relation suivante est valide :

$$Om \times V_a^2 > 1,8 \ m^2/g,$$

avec $O_m[m^2/g]$ : surface moyenne du/des noir(s) de carbone utilisé(s),
$V_a$ : proportion volumique du/des noir(s) de carbone dans le mélange de caoutchouc pour la/les partie(s) d'épaulement.

Fig. 1

Fig. 2

EP 3 238 958 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015149957 A
- US 2016059636 A1
- JP 2012143993 A
- DE 102008018340 A1
- EP 2108528 B1
- EP 0872360 B1
- EP 0798142 B1